Europäisches Patentamt

European Patent Office

Office européen des brevets

(19)

(11) Veröffentlichungsnummer: **0 380 981**

**A2**

(12) # EUROPÄISCHE PATENTANMELDUNG

(21) Anmeldenummer: **90101087.6**

(22) Anmeldetag: **19.01.90**

(51) Int. Cl.5: **G01M 11/00**

(30) Priorität: **01.02.89 SU 4688092**
**01.02.89 SU 4688480**

(43) Veröffentlichungstag der Anmeldung:
**08.08.90 Patentblatt 90/32**

(84) Benannte Vertragsstaaten:
**AT BE CH DE FR GB LI NL SE**

(71) Anmelder: **LENINGRADSKOE OTDELENIE TSENTRALNOGO NAUCHNO-ISSLEDO-VATELSKOGO INSTITUTA SVYAZI (LONIIS)**
**ulitsa Varshavskaya, 11**
**Leningrad(SU)**

(72) Erfinder: **Bukhshtab, Mikhail Alexandrovich**
**ulitsa Novoselov, 41, kv. 21**
**Leningrad(SU)**
Erfinder: **Koromyslichenko, Vladislav Nikolaevich**
**ulitsa Dekabristov, 58, kv. 23**
**Leningrad(SU)**
Erfinder: **Ovsyannikov, Andrei Alexandrovich**
**ulitsa Chudnovskogo, 8, kv. 70**
**Leningrad(SU)**

(74) Vertreter: **Patentanwälte Beetz sen. - Beetz jun. Timpe - Siegfried - Schmitt-Fumian-Mayr**
**Steinsdorfstrasse 10**
**D-8000 München 22(DE)**

(54) **Verfahren zur Ermittlung optischer Verluste an den Stirnseiten und Stirnseitenverbindungsstellen von Lichtleiterfasern.**

(57) Die Aufgabe der Erfindung besteht darin, das Auflösungsvermögen durch Vergrößerung eines maximal möglichen Abstandes bis zu der Stelle der zu untersuchenden Verbindung zu erhöhen sowie das Anwendungsgebiet durch Schaffung der Möglichkeit, die Bearbeitungsgüte der Stirnseiten, deren Parallelität und Koaxialität zu ermitteln, zu erweitern. Dies wird gewährleistet durch eine Einführung von Licht-Sendeimpulsen in die zu verbindenden Lichtleiter, die Messung der Gesamtleistung der Strahlung von den Stirnseiten und Stirnseitenverbindungen und durch die Ermittlung optischer Verluste in diesen Abschnitten.

FIG.2

# VERFAHREN ZUR ERMITTLUNG OPTISCHER VERLUSTE AN DEN STIRNSEITEN UND STIRNSEITENVERBINDUNGSSTELLEN VON LICHTLEITERFASERN

Die vorliegende Erfindung bezieht sich auf das Gebiet der Faseroptik und kann bei der Ermittlung der Dämpfung der Strahlung an den Verbindungsstellen von Lichtleitern ohne Luftspalt in Städte- und Hauptverbindungsnetzen, die unter Anwendung von Lichtleiterfasern gebaut worden sind, eingesetzt werden.

Es ist ein Verfahren zur Messung von optischen Verlusten in Lichtleiterfasern im reflektierten Licht bekannt, das in der Einführung eines Strahlungs-Sendeimpulses in den zu messenden Lichtleiter über einen Leerlauflichtleiter, dessen Länge der Hälfte der Länge der eingestellten Modenverteilung für diesen Typ von Lichtleitern entspricht, in der Messung der Energie des $N_1$-Impulses, der von der Ausgangsstirnseite des Leerlauflichtleiters reflektiert wird, in der Messung der Energie des $N_2$-Impulses, der von der in einem minimalen Abstand voneinander angeordneten Ausgangs stirnseite des Leerlauflichtleiters und der Eingangsstirnseite des zu messenden Lichtleiters reflektiert wird, in der Messung der Energie des von der Ausgangsstirnseite des zu messenden Lichtleiters reflektierten $N_3$-Impulses sowie in der Ermittelung der optischen Verluste pro Längeneinheit des zu messenden Lichtleiters besteht (s. UdSSR-Anmeldung Nr. 4204727).

Der Nachteil dieses bekannten Verfahrens besteht darin, daß es unmöglich ist, optische Verluste an der Einführung und der Ausführung der Strahlung in den zu messenden Lichtleiter, d.h. an der Ausgangsstirnseite des Leerlauflichtleiters und an den Eingangs- und Ausgangsstirnseiten der zu messenden Lichtleiter sowie im Luftspalt zwischen den angekoppelten Lichtleitern zu ermitteln, weil ihre Stirnseiten nicht zueinander parallel und die Kerne nicht zueinander axial ausgerichtet sind.

Es ist ein Verfahren zur Ermittlung optischer Verluste an den Verbindungsstellen der Lichtleiter nach der sich in der Rückrichtung verbreiteten Streuungsstrahlung bekannt, das in der Einführung der Strahlung in zu verbindende Lichtleiter, der Messung der Strahlungsintensität, die von den Lichtleitern vor und nach der Verbindungsstelle gestreut sind, sowie in der Ermittlung optischer Verluste an der Verbindungsstelle der Lichtleiter besteht (s. Schickedanz D., Theorie der Messungen nach der Methode der Rückstreuung in Lichtleitern - Zarubeshnaja radioelektronika, 1981, Nr. 6, S. 87 bis 94).

Dieses Verfahren kommt seinem Wesen nach dem anmeldungsgemäßen Verfahren am nächsten.

Der Nachteil dieses bekannten Verfahrens besteht in der geringen Intensität der gestreuten Strahlung, was den maximal möglichen Abstand in der Lichtleiterlinie bis zur strahlenden Verbindungsstelle begrenzt.

Es besteht jedoch ein Bedürfnis die optischen Verluste auf diese Art bestimmen zu können und dessen Bedeutung steigt nach der Verlängerung der Hauptlichtleiterlinien der Verbindungskabel, deren Länge zur Zeit 30 bis 40 Kilometer und mehr erreichen kann und die mit einem Meßgerät nur von einer Seite zugänglich sind.

Die Aufgabe der vorliegenden Erfindung besteht in der Erweiterung des Anwendungsgebietes durch Schaffung der Möglichkeit, die Bearbeitungsqualität von Stirnseiten, deren Parallelität und Koaxialität zu ermitteln sowie das Auflösungsvermögen durch Vergrößerung eines maximal möglichen Abstandes bis zu der zu untersuchenden Verbindungsstelle zu erhöhen, was zu einer Erweiterung des dynamischen Meßbereiches beiträgt.

Die erste gestellte Aufgabe wird dadurch erreicht, daß in dem bekannten Verfahren, das in einer nacheinanderfolgenden Einführung eines Sendeimpulses der Strahlung in die zu verbindenden Lichtleiterfasern und in der darauffolgenden Ermittlung von optischen Verlusten an deren Verbindungsstellen besteht, vorgeschlagen wird, nach der sich in der Rückrichtung verbreitenden Strahlung die Energie oder die Gesamtleistung der $N_1$-Impulse, die von der Ausgangsstirnseite des ersten zu messenden Lichtleiters reflektiert sind, zu messen; nach der Differenz des Wertes $N_1$ von $N_{1max}$ die Verluste $K_1 = 10 \lg (N_{1max}/N_1)$ an der Ausgangsstirnseite des ersten Lichtleiters zu ermitteln, die Energie oder die Gesamtleistung der $N_2$-Impulse, die von den mit dem zu messenden Luftspalt verbundenen Stirnseiten des ersten und des zweiten Lichtleiters reflektiert sind, zu messen, nach der Differenz des Wertes $N_2$ von $N_{2max}$ und $N_1$ von $N_{1max}$ die Verluste $K_2 = 10 \lg (N_{2max}/N_2) - K_1$ an der Eingangsstirnseite des zweiten Lichtleiters zu ermitteln, und nach der Differenz des Wertes von $N_2/N_1$ von dem maximalen

$$\left( \frac{N_2}{N_1} \right)_{max} = \frac{(n+1)^2}{n^2 + 1} \; .$$

die Verluste $K_/$ = 10 lg $[(N_2/N_1)$ max/ $(N_2/N_1)]$ auf die Lageabweichung von der Parallelität der angekoppelten Stirnseiten zueinander zu ermitteln, die Energie oder die Gesamtleistung der $N_{3u}$-Impulse, die die zu messende Verbindung passiert haben und von der ideal bearbeiteten Ausgangsstirnseite des zweiten Lichtleiters reflektiert werden, zu messen; nach der Differenz des Wertes $N_{3u}$ von der maximalen Energie bzw. Leistung die Verluste $K_n$ = 10 lg/$N_{3max}/N_{3u}$) auf die Achsabweichung der Verbindung zu ermitteln; die Energie oder die Gesamtleistung der $N_3$-Impulse, die von der Ausgangsstirnseite des zweiten zu messenden Lichtleiters reflektiert sind, zu messen; nach der Differenz des Wertes $N_3$ von $N_{3u}$ die Verluste $K_3$ = 10 lg $(N_{3u}/N_3)$ an der Ausgangsstirnseite des zweiten Lichtleiters zu ermitteln, die Gesamtverluste in der zu messenden Verbindung der $K_{\Sigma C}$-Lichtleiter nach der Beziehung

$K_{\Sigma C}$ = $K_/$ + $K_n$

und die Gesamtverluste $K_T$ an allen drei zu messenden Lichtleiterstirnseiten nach der Beziehung

$K_{\Sigma T}$ = $K_1$ + $K_2$ + $K_3$

zu bewerten.

Um die zweite Teilaufgabe zu realisieren, wird vorgeschlagen, die Energie oder die Gesamtleistung des $N_1'$-Impulses, der durch mit einem minimalen Luftspalt angekoppelte Stirnseiten der anzukoppelnden Lichtleiter passiert, von der Ausgangsstirnseite des zweiten anzukoppelnden Lichtleiters reflektiert und zur Eingangsstirnseite des ersten Lichtleiters zurückgekehrt ist, den ersten und den zweiten anzukoppelnden Lichtleiter zu verbinden, die Energie oder die Leistung des $_2'$-Impulses, der die Verbindungsstelle passiert und von der Ausgangsstirnseite des sich gebildeten einheitlichen Lichtleiters reflektiert ist, zu messen und optische Verluste K an der Verbindungsstelle gemäß der Beziehung

$$K[dB] = 10lg2n - 10lg(n^2+1) + 5lg\ N_2' - 5lgN_1'\ ,\qquad (1)$$

worin n Gruppenbrechungsindex des Kernes der zu verbindenden Lichtleiter bedeutet, zu ermitteln.

Das Verfahren zur Ermittlung optischer Verluste, die von der Bearbeitungsgüte der Stirnseiten abhängen, enthält in folgender Reihenfolge die zusammenhängenden Verfahrensschritte:

1. Man führt einen Strahlungsimpuls (Strahlungsimpulse) in den ersten zu messenden Lichtleiter ein.

2. Man mißt die Energie (die Gesamtleistung) der $N_{1max}$-Impulse, die von der ideal bearbeiteten Ausgangsstirnseite dieses Lichtleiters reflektiert sind und die sich in der Rückrichtung verbreiten.

3. Man schließt an die Ausgangsstirnseite des ersten Lichtleiters eine ideal bearbeitete Eingangsstirnseite des zweiten zu messenden Lichtleiters parallel und mit einem minimalen Luftspalt an.

4. Man mißt die Energie (die Gesamtleistung) der $N_{2max}$-Impulse, die von den ideal verbundenen Stirnseiten reflektiert werden.

5. Man führt die Lichtimpulse in den zweiten zu mes senden Lichtleiter, der mit dem ersten Lichtleiter ideal axial ist, ein.

6. Man mißt die Energie (die Gesamtleistung) der $N_{3max}$-Impulse, die von der ideal bearbeiteten Ausgangsstirnseite des zweiten Lichtleiters reflektiert werden.

7. Man bearbeitet die Ausgangsstirnseite des ersten zu messenden Lichtleiters.

8. Man mißt die Energie (die Gesamtleistung) der $N_1$-Impulse, die von der ideal bearbeiteten Ausgangsstirnseite des ersten Lichtleiters reflektiert werden.

9. Man ermittelt die Verluste $K_1$ = 10 lg $(N_{1max}/N_1)$ an der Ausgangsstirnseite des ersten Lichtleiters.

10. Man schließt die ideal bearbeitete Eingangsstirnseite des zweiten Lichtleiters an die Ausgangsstirnseite des ersten Lichtleiters mit einem idealen Luftspalt an.

11. Man mißt die Energie (die Gesamtleistung) der $N_2$-Impulse, die von den mit einem zu messenden Luftspalt verbundenen Stirnseiten des ersten und des zweiten Lichtleiters reflektiert werden.

12. Man ermittelt die optischen Verluste $K_2$ = 10 lg $(N_{2max}/N_2)$ - $K_1$ an der Eingangsstirnseite des zweiten Lichtleiters und die Verluste $K_/$ = 10 lg $[(N_2/N_1)max/(N_2/N_u)]$ in bezug auf die Lageabweichung von der Parallelität der angekoppelten Stirnseiten.

13. Man verbindet den ersten und den zweiten zu messenden Lichtleiter mit einer idealen Koaxialität.

14. Man mißt die Energie (die Gesamtleistung) der $N_{3u}$-Impulse, die die zu messende Verbindung zweimal passiert haben und die von der ideal bearbeiteten Ausgangsstirnseite des zweiten Lichtleiters reflektiert sind.

15. Man ermitteln die optischen Verluste $K_n$ = 10 lg$(N_{3max}/N_{3u})$ in bezug auf die Achsabweichung der zu messenden Verbindung.

16. Man bearbeitet die Ausgangsstirnseite des zweiten zu messenden Lichtleiters.

17. Man mißt die Energie (die Gesamtleistung) der $N_3$-Impulse, die von der ideal bearbeiteten Ausgangsstirnseite des zweiten Lichtleiters reflektiert sind.

18. Man ermittelt die optischen Verluste $K_3$ -10 lg$(N_{3u}/N_3)$ an der Ausgangsstirnseite des zweiten zu messenden Lichtleiters.

19. Man bewertet die optischen Verluste $K_{\Sigma C}$ in der zu messenden Verbindung nach der Beziehung

$K_{\Sigma C} = K_{\#}$ + $K_n$, während man die Gesamtverluste $K_{\Sigma T}$ an allen drei zu messenden Stirnseiten nach der Beziehung

$K_{\Sigma T} = K_1 + K_2 + K_3$

ermittelt.

Das Verfahren zur Ermittlung optischer Verluste an den Stirnverbindungsstellen der Lichtleiter für einen maximal möglichen Abstand von der zu untersuchenden Stirnseite enthält folgende Reihenfolge von zusammenhängenden Schritten:

1. Man führt den Sende-Lichtimpuls in die zu verbindenden Lichtleiter ein.

2. Man mißt die Energie oder die Leistung des $N_1'$-Impulses, der durch die mit einem minimalen Luftspalt angekoppelten auf eine darauffolgende Verbindung vorbereiteten Stirnseiten der anzukoppelnden Lichtleiter passiert, von der Ausgangsstirnseite des zweiten anzukoppelnden Lichtleiters reflektiert und zur Eingangsstirnseite des ersten Lichtleiters nach dem früheren Wege zurückgekehrt ist.

3. Man verbindet den ersten und den zweiten anzukoppelnden Lichtleiter.

4. Man mißt die Energie oder die Leistung des $N_2$-Impulses, der die Verbindungsstelle nach dem früheren Wege passiert und von der Ausgangsstirnseite des sich gebildeten einheitlichen Lichtleiters reflektiert ist.

5. Man mißt die optischen Verluste K an der Verbindungsstelle gemäß der Beziehung

$K[dB] = 10 \lg 2n - 10 \lg (n^2 + 1) + 5 \lg N_2' - 5 \lg_1^{N'}$ .

Der Vorteil des anmeldungsgemäßen Meßverfahrens besteht darin, daß dank einer wesentlich stärkeren Abhängigkeit der Menge der reflektierten Strahlung vom Zustand der Stirnseitenflächen der Lichtleiter und von besonders reinem Quarzglas, aus welchem diese gezogen sind, im Vergleich zu der durch dieselben Stirnseiten passierenden Strahlung sowie wegen der um einige Ordnungen höhere Strahlung von den Stirnseiten im Vergleich zu der durch die Lichtleiter streuenden Strahlung die Empfindlichkeit der Messungen im reflektierten Licht gegenüber dem Zustand der Stirnseitenflächen, deren Parallelität, optischen Verlusten im Luftspalt zwischen den Stirnseiten und der Koaxialität der Faserlichtleiter, die die Verluste für die Abweichung der Moden ermittelt, dieses Verfahren die Empfindlichkeit zu analogen Verlusten in der passierenden oder mit den Lichtleitern streuenden Strahlung bedeutend übertrifft, sowie darin, daß die Messungen nicht in dem durch verschiedene Abschnitte der zu verbindenden Lichtleiter streuenden sondern in dem von deren äquivalenten Stirnseiten reflektierten Licht, dessen Intensität um einige Ordnungen höher ist, durchgeführt werden können, wodurch es gelingt, den dynamischen Meßbereich um die entsprechende Zahl und damit den Abstand von der Stelle der zu strahlenden Verbindungsstelle der Lichtleiter zu erhöhen.

Die Erfindung wird anhand der Zeichnung näher erläutert. Es zeigen:

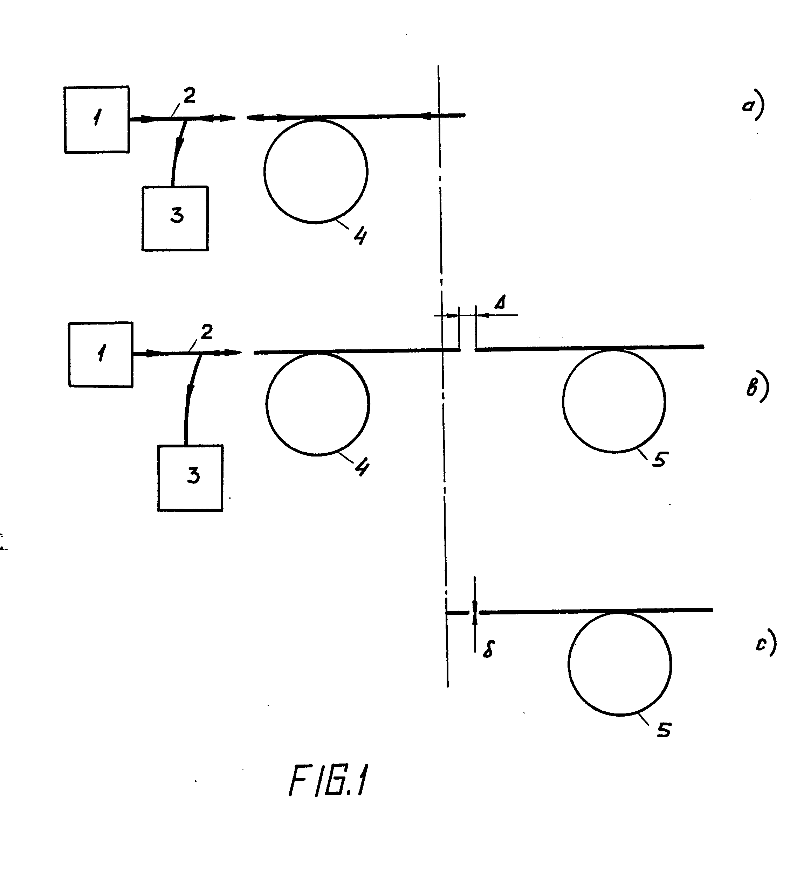

Fig. 1 eine Vorrichtung zur Durchführung des erfindungsgemäßen Verfahrens der Messung von Verlusten, die von der Bearbeitungsgüte der Stirnseiten der Lichtleiterfasern abhängen, und

Fig. 2 eine Vorrichtung zur Durchführung des Verfahrens zur Messung von Verlusten an den stirnseitigen Verbindungsstellen der angekoppelten Lichtleiter.

Die Vorrichtung enhält eine Strahlungsquelle 1, einen Strahlteiler 2 der einfallenden und der reflektierten Strahlung, einen Empfänger der reflektierten Impulse 3, den ersten und den zweiten anzukoppelnden Lichtleiter 4 und 5.

Das Verfahren wird folgenderweise durchgeführt. Man führt den Strahlungsimpuls der Strahlungsquelle 1 über den Strahlteiler 2 in den ersten anzukoppelnden Lichtleiter 4 ein, und die von seiner Ausgangsstirnseite reflektierte Strahlung kommt über denselben Strahlteiler 2 in den Empfänger des reflektierten Lichtes (Ansicht a). Das in dem entsprechenden Zeitintervall ausgeschiedene Signal $N_1$, das durch den von der Ausgangsstirnseite reflektierten Impuls bedingt ist, ist gleich:

$N_1 = \text{const } \tau_{1,2}(1 - \rho)\exp(-\mu_4 l_4)\rho\exp(-\mu_4 l_4)(1 - \rho)\tau_{2,3}$

$= \text{const } \tau_{1,2} \tau_{2,3}(1 - \rho)^2\exp(-2\mu_4 l_4)\rho$ ,      (2)

wobei der Faktor "const" die Spektralempfindlichkeit des Empfängers 3 und den Strahlungsstrom der Quelle 1 charakterisiert, $\tau_{1,2}$, $\tau_{2,3}$ den Durchlaßgrad des Strahlteilers 2 bei der Lichtausbreitung von der Quelle 1 zum Empfänger 2, $(1 - \rho)$ den Durchlaßgrad der Eingangsstirnseite des Lichtleiters 4, $\rho$ den Reflexionsgrad der Ausgangsstirnseite, $\mu_4$, $l_4$ Schwächungsgrad der Strahlung und die Länge des Licht leiters 4 bedeuten.

Zwei Faktoren im Ausdruck 2 charakterisieren den Zustand der Stirnseitenflächen des Lichtleiters, und zwar $(1 - \rho)$ den Zustand der Eingangsfläche, den Zustand der Ausgangsfläche.

Relative Änderungen des Signals $\Delta N_1/N_1$, die aus dem Ausdruck (2) folgen, sind

$$\frac{\Delta N_1}{N_1} = \pm \left( \frac{2\Delta\rho}{1-\rho} + \frac{\Delta\rho}{\rho} \right)$$

gleich (nur in der Funktion der Änderungen der zwei genannten Faktoren).

Da man aus dem Quarzglas (optischen Glas), aus welchem die Lichtleiter gezogen sind, $\rho \cong 0,035$ und dementsprechend $1-\rho \cong 0,965$ errechnen kann, werden die Änderungen $\rho$ der Eingangs- und $\rho$ der Ausgangsstirnseiten um $\pm$ 10% zu den Änderungen von $2\Delta\rho(1-\rho) = \pm 2 \times 0,0035/(1-0,035-0,0035) = \pm 0,007/0,9615 = \pm 0,0073 = \pm 0,7\%$ und zu den Änderungen

$$= \pm \frac{0,0035}{0,035} = \pm 0,1 = \pm 10\%$$

$$\Delta\rho/\rho$$

führen.

Mit anderen Worten sind die Änderungen $\Delta N_1/N_1$ des von der Ausgangsstirnseite des zu verbindenden Lichtleiters reflektierten Signals im Ergebnis derselben Änderungen des optischen Zustandes der Eingangs- und der Ausgangsfläche um 13-fach, d.h. mehr als um eine Ordnung empfindlicher zum Zustand der Ausgangsstirnseite als zum Zustand der Eingangsstirnseite. Analogieweise kann man zeigen, daß bei Erforschungen im gestreuten Licht, das sich im Rückstrahlengang die anzukoppelnde Fläche, die Änderungen des Zustandes der Fläche ebenfalls als $2\Delta\rho/(1-\rho)$ und nicht als $\Delta\rho/\rho$ bezeichnen kann.

Deswegen können die Messung der Energie (der Leistung) $N_1$ bei verschiedenen Spaltflächen der Ausgangsstirnseite des Lichtleiters 4 und die Ermittlung des Verhältnisses $N_1$ zum maximalen Wert $N_{1max}$, die bei einer idealen Spaltfläche erreicht werden kann (was visuell mittels eines Mikroskops kontrolliert werden kann) am sichersten und mit der größten Empfindlichkeit zu vorhandenen Defekten die Bearbeitungsgüte der Ausgangsstirnseite des ersten Lichtleiters der Verbindungslinie bewerten. In Dezibel betragen die Verluste K an dieser Stirnseite $K_1 = 10 \lg (N_{1max}/N_1)$.

Nachher bearbeitet man die Eingangsstirnseite des zweiten Lichtleiters 5 und verbindet ihn mit der Ausgangsstirnseite des ersten Lichtleiters 4 (Ansicht b) mit dem entsprechenden Luftspalt, der für den Beobachter am optimalsten scheint. Mit demselben Empfänger 3 mißt man die Energie oder die Gesamtleistung der $N_2$-Impulse, die von den ideal verbundenen Stirnseiten der Lichtleiter 4, 5 reflektiert sind.

$$N_2 = const \cdot \tau_{1,2} \cdot \tau_{2,3} \cdot (1-\rho)^2 \exp(-2\mu_4 l_4)[\rho + (1-\rho)^2 \rho +$$
$$+(1-\rho^2)\rho^3 \ldots] = const \cdot \tau_{1,2} \tau_{2,3} (1-\rho)^2 \exp(-2\mu_4 l_4)$$
$$(1 + \frac{1-\rho}{1+\rho}) = const \cdot \tau_{1,2} \tau_{2,3}(1-\rho)^2 \exp(-2\mu_4 l_4) \frac{2\rho}{1+\rho} \quad (3)$$

Aus der Formel (3) geht hervor, daß die Änderungen des optischen Zustandes der angekoppelten Stirnflächen noch um das zweifache wegen des Faktors $\pm 2\Delta\rho/\rho$ stärker die Änderungen des Signals $N_2$: $\Delta N_2/N_2$ beeinflussen. Folglich wirken eine niedrige Qualität der Spaltfläche, die Lageabweichung von der Parallelität der Stirnseiten sowie zusätzliche optische Verluste darin maximal auf Änderungen des vom Empfänger 3 zu registrierenden Signals $\Delta N_2/N_2$ aus.

Somit charakterisiert das Verhältnis $N_2$ zu $N_{2max}$, welches dem idealen Zustand der Stirnseiten und deren parallelen Verbindung bei einem minimalen Luftspalt entspricht, der die Modenverteilung der Strahlung in Lichtleitern nicht verletzt, die Gesamtverluste in der Strahlung in dem von der Verbindung gebildeten Luftspalt. Deswegen kann man, wenn man aus dem Ausdruck (2) die Verluste $K_1$ an der ersten Stirnseite kennt, die Verluste $K_2$, die von der zweiten Stirnseite (d.h. von der Eingangsstirnseite des Lichtleiters 5) in die Verbindung eingeführt werden, nach der Beziehung $K_2 = 10 \lg (N_{2max}/N_2) - 10 \lg (N_{1max}/N_1) - 10 \lg (N_{2max}/N_2) - K_1$ ermitteln.

Um aus der Gesamtsumme der Verluste im Luftspalt nur die Verluste auszuscheiden, die durch die Lageabweichung von der Parallelität der zu verbindenden Lichtleiter bedingt werden, errechnet man die Beziehung

$$\frac{N_2}{N_1} = \frac{2}{1 + \rho} \qquad (4),$$

deren maximaler Wert bei einem idealen Zustand der Stirnseiten und deren Parallelität sowie beim Fehlen von zusätzlichen Verlusten

$$\left(\frac{N_2}{N_1}\right)_{max} = \frac{2}{1+\left(\frac{n-1}{n+1}\right)^2} = \frac{(n+1)^2}{n^2+1} \qquad (5)$$

worin n Gruppen-Brechungsindex der Lichtleiterkerne ist, beträgt. Deswegen bestimmt die Nichtübereinstimmung des Verhältnisses (4) dem Ausdruck (5) die optischen Verluste in der Verbindung, die durch eine niedrige Bearbeitungsgüte der Stirnseiten (insbesondere der Eingangsstirnseite des zweiten Lichtleiters, da der Zustand der Ausgangsstirnseite des ersten Lichtleiters schon ermittelt ist) durch eine Lageabweichung von der Parallelität der Flächen und die gesamten optischen Verluste im Luftspalt bedingt sind. Die Verluste, die mit der Lageabweichung von der Parallelität in den angekoppelten Stirnseiten verbunden und in Dezibel ausgedrückt sind, betragen

$K_{//}$ = 10 lg [(N$_2$/N$_1$)max/(N$_2$/N$_1$)].

In allen oben angeführten Fällen der Verluste des Nutzsignals in der sich gebildeten Lichtleiterverbindung sind die Verluste, die mit der Achsabweichung der Kerne der zu verbindenden Lichtleiter verbunden sind, berücksichtigt worden, weil es praktisch unmöglich ist, nach der Reflexion von der Eingangsstirnseite des zweiten anzuschließenden Lichtleiters zu ermitteln, wie genau die Kerne angekoppelt sind, weil der Reflexionsgrad der Umhüllung eines hochwertigen Kleinmodenlichtleiters sich von dem Reflexionsgrad der Kerne unterscheidet. Deshalb ist es erforderlich für die Ermittlung der Verluste in bezug auf die Achsabweichung der Kerne die Strahlung in den anzuschliessenden Lichtleiter einzuführen und erst danach die Verluste in bezug auf die Achsabweichung zu ermitteln.

Um reelle Verluste in bezug auf die Achsabweichung zu ermitteln, zentriert man die zu verbindenden Lichtleiter 4 und 5; man führt einen Strahlungsimpuls der Quelle 1 in den Lichtleiter 5 (Ansicht c) ein, man ändert das Zeitintervall der Meßzeit des Empfängers 3 derart, daß nur die Impulse, die von der Ausgangsstirnseite des Lichtleiters 5 reflektiert werden, registriert werden könnten; und bei dieser ideal bearbeiteten Stirnseite, deren idealer Zustand beispielsweise visuell mittels eines Mikroskops kontrolliert wird, wird die Energie oder die Gesamtleistung der reflektierten N$_{3u}$-Impulse gemessen.

$$N_{3u} = const \cdot T_{1,2} \cdot T_{2,3} (1-\rho)^2 exp \ (-2\mu_4 l_4)\left[\frac{(1+\rho)^2}{1-\rho^2}\right] exp(-2\mu_5 l_5)$$

$$N_u = const \ \tau_{1,2} \tau_{2,3}(1-\rho)^2\left(\frac{1-\rho}{1+\rho}\right)^2 exp \ (-2\mu_v \ell_v - 2\mu_s \ell_s)\rho_u, \qquad (6)$$

worin [(1-$\rho$)/(1 + $\rho$)]$^2$ Quadrat des Durchlaßgrades des Luftspalts zwischen den angekoppelten Lichtleitern, $\rho_u$ Reflexionsgrad der ideal bearbeiteten Ausgangsstirnseite bedeuten.

Nach der Analogie mit der Ermittlung der Abweichung $\Delta N_1/N_1$ folgt aus dem Ausdruck (6), daß die Bedeutung N$_3$ von den Änderungen $\Delta\rho/\rho$ des Zustandes der Ausgangsstirnseite des zweiten Lichtleiters stark und von den Zuständen der anderen Stirnseiten und des Luftspaltes schwach abhängt. Aber da man bei der Ableitung des Ausdruckes (6) davon ausgegangen ist, daß die ganze aus dem ersten Lichtleiter herausgegangene Strahlung wegen einer geometrischen Anpassung ihrer Kerne in den zweiten Lichtleiter gelangt und umgekehrt, geht der Ausdruck (6) bei der Nichtübereinstimmung (Achsabweichung) der Kerne in den Ausdruck

$N_{3u} = const \cdot \tau_{1,2} \ \tau_{2,3}(1-\rho)^2(\frac{1-\rho}{1+\rho})^2 (1-K_n)^2 exp(-2 \ \mu_4 l_4 -- 2\mu_5 l_5)\rho_u$     (7),

über, worin K$_n$ optische Verluste in bezug auf die Achsabweichung durch eine geometrische Nichtübereinstimmung der Lichtleiterkerne bedeutet. Es ist offensichtlich, daß im Unterschied zum Ausdruck (7) die Nichtübereinstimmung der Lichtleiterkerne zu keiner wesentlichen Änderung des Ausdruckes (3) führt, weil der Reflexionsgrad der Umhüllung, die die Lage des Kernes bei dessen Verschieben einnimmt, sich sehr schwach vom Reflexionsgrad des Kernes unterscheiden kann.

Folglich ist gemäß den Ausdrücken (6), (7) das Signal $N_3$ zum Stand der Ausgangsstirnseite des zweiten Lichtleiters und zur Nichtübereinstimmung der Lichtleiterkerne maximal empfindlich.

Nach der Ermittlung der Verluste in bezug auf die Achsabweichung wird die Ausgangsstirnseite des zweiten zu verbindenden Lichtleiters bearbeitet und man mißt die Energie (die Gesamtleistung) der $N_3$-Impulse, die von der ideal bearbeiteten Ausgangsstirnseite des zweiten Lichtleiters mit den Koeffizienten $\rho$, ohne die Verbindung zu verletzen, gemäß dem Ausdruck

$$N_3 = \text{const} \cdot \tau_{1,2}\tau_{2,3}(1-\rho)^2\left(\frac{1-\rho}{1+\rho}\right)^2(1-K_n)\exp(-2\mu_4 l_4 - 2\mu_5 l_5)\rho \qquad (8)$$

reflektiert sind.

Aus den Ausdrücken (7) und (8) $N_3/N_4 \cdot \rho/\rho_u$ werden gerade die Verluste $K_3$ an der Ausgangsstirnseite des zweiten Lichtleiters in dB nach der Beziehung

$$K_3 = 10 \lg (N_{3u}/N_3) \qquad (9)$$

ermittelt.

Da nach der Durchführung der aufgezählent Operationen alle Arten von Verlusten an den Stirnseiten und in der Verbindung der zu messenden Lichtleiter getrennt ermittelt worden sind, können die Gesamtverluste an den Stirnseiten der Lichtleiter $K_{\Sigma T}$ und in ihrer Verbindung $K_{\Sigma C}$ bewertet werden. Man ermittelt die Verluste an den Stirnseiten gemäß der Beziehung

$$K_{\Sigma T} = K_1 + K_2 + K_3 \qquad (10)$$

und in der Verbindung nach der Beziehung

$$K_{\Sigma C} = K_{//} + K_n \qquad (11)$$

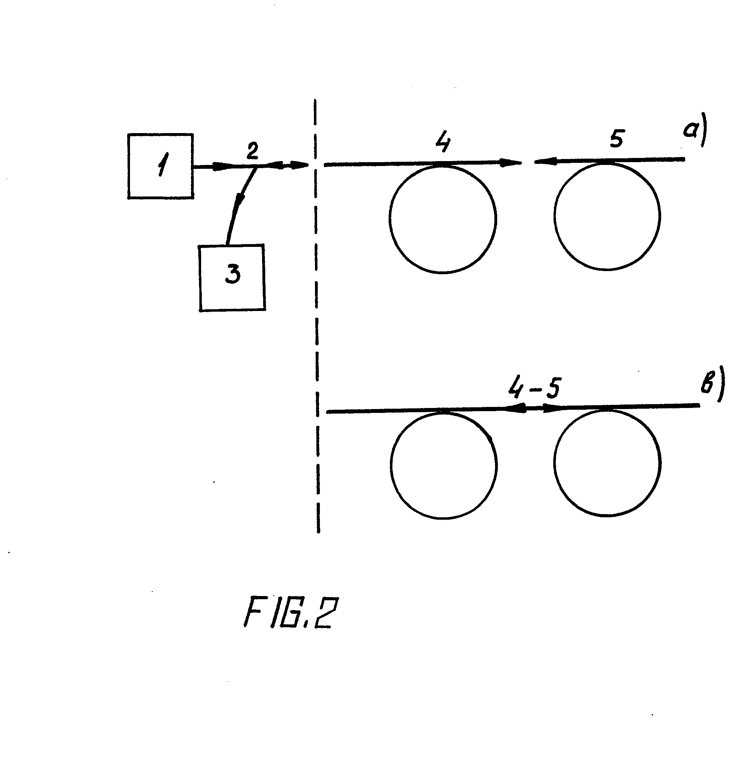

Um die Größe der optischen Verluste in stirnseitigen Verbindungen der Faserlichtleiter zu ermitteln, führt man den Impuls (die Impulse) der Strahlungsquelle 1 über den Strahlteiler 2 nacheinander in den ersten (4) und den zweiten (5) zu verbindenden Lichtleiter ein. Nachdem man die Kerne der Lichtleiter mittels einer beliebigen Justiervorrichtung in der Weise, daß diese miteinander und mit dem Strahlteiler axial angeordnet wären und die Luftspalte minimal wären und dabei die stationäre Modenverteilung der Sendestrahlung nicht verletzten, angekoppelt hat, mißt man mit dem Empfänger 3 die Leistung oder die Energie des Impulses, der von der Ausgangsstirnseite des zweiten anzukoppelnden Lichtleiters 5 reflektiert ist (Ansicht a in Fig. 2). Das Signal des Empfängers $N_1'$ ist in diesem Fall

$$N_1' = K\rho_n T_{1,2} \cdot T_{2,4}^2 \exp(-2\mu_n l_n) T_{4,5}^2 \exp(-2\mu_5 l_5)\,\Im\, T_{2,3} =$$
$$= K\phi_n T_{1,2} T_{2,3} T_{2,4}^2 T_{4,5}^2 \Im \exp(-2\mu_n l_n)\exp(-2\mu_5 l_5) \qquad (12),$$

worin

K ein Proportionalitätskoeffizient ist;

$\phi_n$ den Strom oder die Strahlungsenergie der Quelle 1 bedeutet;

$\tau_{1,2}$; $\tau_{3,3}$ die Durchlaßgrade des Lichtstrms von der Quelle zum Strahlteiler und vom Strahlteiler zum Empfänger bedeuten;

$\tau_{2,4}$; $\tau_{4,5}$ den Durchlaßgrad des Luftspalts zwischen dem Strahlteiler 2 und dem ersten zu verbindenden Lichtleiter 4 und zwischen zwei zu verbindenden Lichtleitern 4 und 5 ist;

$\mu_4$; $\mu_5$; $l_4$; $l_5$ Koeffizienten der Schwächung und der Länge der Lichtleiter 4 und 5 bedeuten.

Nach dem Verbinden der Lichtleiter 4, 5 ohne Luftspalt mißt man erneut die Energie oder die maximale Leistung des Impulses, der von der Ausgangsstirnseite des bereits einheitlichen Lichtleiters 4-5 (Ansicht b auf der Fig. 2) reflektiert ist. Dabei ist das $N_2$-Signal des Empfängers 3

$$N_2' = K\phi_n T_{1,2} T_{2,3} T_{2,4}^2 \exp(-2\mu_4 l_4)k^2 \exp(-2\mu_5 l_5)\Im =$$
$$= K\phi_n T_{1,2} T_{2,3} T_{2,4}^2 k^2 \Im \exp(-2\mu_4 l_4)\exp(-2\mu_5 l_5) \qquad (13)$$

gleich, während das Verhältnis der Signale

$$\frac{N_2'}{N_1'} = \frac{K_2}{\tau_{4,5}} \qquad (14)$$

gleich ist.

Da gemäß den Fresnel-Formeln unter Berücksichtigung mehrfacher Strahlungen der Durchlaßgrad $l_{4,5}$ des Luftspaltes zwischen den angekoppelten Lichtleitern

$$\tau = (1-\xi)^2 \frac{1}{1-\xi^2} = \frac{1-\xi}{1+\xi} = \frac{2n}{n^2+1} \qquad (15)$$

worin $\xi$ Strahlungskoeffizient der Stirnseite bedeutet; n Brechungsindex ist, gleich ist, kann der Ausdruck (14) in die Form

$$K = \frac{2n}{n^2+1} \sqrt{\frac{N_2'}{N_1'}} \qquad (16)$$

umgeschrieben werden.

Man ermittelt die zu suchenden Verluste K an der Verbindungsstelle der Lichtleiter (in dB) nach folgender Beziehung

$$K = 10 \lg 2n - 10 \lg (n^2 + 1) + 5 \lg N_2' - 5 N_1' \qquad (17)$$

Da der Brechungsindex der Lichtleiter bekannt ist oder mit einer Genauigkeit, die nicht schlechter als $\Delta n = \pm (1.10^{-3} - 1.10^{-4})$ ermittelt werden kann, übertrifft die Unbestimmt heit des Strahlungskoeffizienten des Lichtleiters aus einem besonders reinen Quarzglas $\Delta\xi \pm 0,0025 \times 0,00347718 \leq \pm 1.10^{-4}$, während die Bedeutung $\frac{\Delta t}{t} \leq \pm 2.10^{-4}$ d.h. die Änderung des Durchlaßgrades der einen Stirnseite gegenüber dem errechneten Wert $\pm 0,001$ dB und $\frac{\Delta t}{t}$ des Luftspaltes $\leq \pm 0,001$ dB nicht übersteigt. Folglich ist die Meßgenauig keit nach der Formel (7) unter Substitution bekannter Werte des Brechungsindexes bedeutend höher als die Genauigkeit, die bei den Messungen nach dem Stand der Technik mittels Reflektometern im gestreuten Licht erreicht wird, und die für die genauesten Geräte $\pm 0,01$ dB beträgt.

Somit gestattet es das anmeldungsgemäße Verfahren zur Messung von Verlusten in Faserlichtleitern die Bearbeitungsgüte und die Parallelität der Stirnseiten, die Koaxialität und die optischen Verluste im Verbindungsbereich mit dem Luftspalt der Faserlichtleiter mit einer maximal hohen Empfindlichkeit zu ermitteln.

Dabei sei angemerkt, daß im Ergebnis der Durchführung solcher Messungen nicht nur die Verluste in der Verbindung der Lichtleiter mit dem Luftspalt sondern auch die minimal möglichen Verluste beim nachfolgenden Spleißen der Lichtleiter ermittelt werden können, weil die Verluste an den Stirnseiten, die bei anderen Messungen nicht festgestellten Verluste verbunden mit Spaltflächendefekten, Absorptionsfilmen u. dgl. m. charakterisieren (s. die Analyse von Empfindlichkeiten im Durchgangs- und reflektierten Licht). Die Möglichkeit, die Verluste an der Ausgangsstirnseite zu ermitteln, bestimmt auch nach der Analogie die Möglichkeit, die Verluste in jeder beliebigen Verbindungsstelle des zweiten Lichtleiters mit dem dritten Lichtleiter oder mit dem ersten Lichtleiter, wenn deren Lage gegenseitig ersetzt wird, zu ermitteln.

Der Vorteil des anmeldungsgemäßen Verfahrens besteht nicht nur in der Erweiterung des dynamischen Meßbereichs und in der Erhöhung der Genauigkeit durch Durchführung von Messungen nicht in einer gestreuten sondern in einer wesent lich intensiveren Strahlung, sondern in einer merklichen Vereinfachung und Beschleunigung des Messungszyklus von optischen Verlusten an der Spleißstelle im Vergleich zu dem in der optischen Reflektometrie anzuwendenden Mehrpunkteverfahren, wenn zuerst der Streuindex im ersten zu verbindenden Lichtleiter, dann im zweiten Lichtleiter ermittelt wird; dann wird der Abstand bis zur Verbindungsstelle gemessen und erst nach der Durchführung aller dieser Verfahrensschritte gelingt es, die Verluste an der Verbindungs- oder Spleißstelle ziemlich genau zu ermitteln. Die Möglichkeit selbst, die Änderungen des Signals an der Spleißstelle zu beobachten, gewährleistet bei den Messungen nach dem anmeldungsgemäßen Verfahren der Meßprozeß von reflektierten Signalen, während die Möglichkeit, die

EP 0 380 981 A2

Verluste an der zu untersuchenden Spleißstelle quantitativ zu ermitteln, durch die anmeldungsgemäße Gesamtheit von Meßoperationen gewährleistet werden kann.

Die vorliegende Erfindung kann bei der Montage, Renovierungsarbeiten und bei der vorbeugenden Wartung von Hauptleitungen optischer Lichtleiterfasern sowie bei der Untersuchung verschiedener Verbindungsarten der Lichtleiterfasern angewendet werden.

## Ansprüche

1. Verfahren zur Ermittlung optischer Verluste an den Stirnseiten und Stirnseitenverbindungsstellen von Lichtleiterfasern, das in der Einführung eines Licht-Sendeimpulses in die zu verbindenden Lichtleiterfasern und in der nachfolgenden Ermittlung optischer Verluste an deren Verbindungsstellen besteht,
dadurch **gekennzeichnet**,
daß man zwecks Erweiterung des Anwendungsgebietes durch Schaffung der Möglichkeit, die Bearbeitungsgüte der Stirnseiten, deren Parallelität und Koaxialität die Energie oder die Gesamtleistung der $N_1$-Impulse, die von der Ausgangsstirnseite des ersten zu messenden Lichtleiters reflektiert sind, mißt, nach dem Unterschied der Bedeutung $N_1$ von $N_{1max}$ die Verluste $K_1 = 10 \lg (N_{1max}/N_1)$ an der Ausgangsstirnseite des ersten Lichtleiters ermittelt, die Energie oder die Gesamtleistung der $N_2$-Impulse, die von den mit dem zu messenden Lichtspalt verbundenen Stirnseiten des ersten und des zweiten Lichtleiters reflektiert sind, mißt, nach der Differenz des Wertes von $N_2$ von $N_{2max}$ und $N_1$ von $N_{1max}$ die Verluste $K_2 = 10 \lg (N_{2max}/N_2) - K_1$ an der Eingangsstirnseite des zweiten Lichtleiters ermittelt und nach der Differenz der Werte $N_2/N_1$ und dem maximalen

$$\left(\frac{N_2}{N_1}\right) max = \frac{(n+1)^2}{n^2 + 1}$$

die Verluste $K_{/\!/} = 10 \lg [(N_2/N_1)_{max}/(N_2/N_1)]$ auf die Lageabweichung von der Parallelität der angekoppelten Stirnseiten ermittelt, die Energie oder die Gesamtleistung der $N_{3u}$-Impulse, die die zu messende Verbindung passiert sind und von der ideal bearbeiteten Ausgangsstirnseite des zweiten Lichtleiters reflektiert sind, mißt, nach der Differenz der Werte $N_{3u}$ und $N_{3max}$ die Verluste $K_n = 10 \lg (N_{3max}/N_{3u})$ auf die Achsabweichung der Verbindung ermittelt, die Energie oder die Gesamtleistung der $N_3$-Impulse, die von der Ausgangsstirnseite des zweiten zu messenden Lichtleiters reflektiert sind, mißt nach der Differenz der Werte $N_3$ und $N_{3u}$ die Verluste $K_3 = 10 \lg (N_{3u}/N_3)$ an der Ausgangsstirnseite des zweiten Lichtleiters ermittelt, die Gesamtverluste in der zu messenden Verbindung der $K_{\Sigma C}$-Lichtleiter nach der Beziehung
$K_{\Sigma C} = K_{/\!/} + K_n$
und die Gesamtverluste $K_{\Sigma T}$ an allen drei zu messenden Lichtleiterstirnseiten nach der Beziehung
$K_{\Sigma T} = K_1 + K_2 + K_3$
bewertet.

2. Verfahren zur Ermittlung optischer Verluste an den Stirnseiten und Stirnseitenverbindungen der Lichtleiterfasern nach Anspruch 1,
dadurch gekennzeichnet,
daß man zwecks Erhöhung des Auflösungsvermögens durch Vergrößerung des Abstandes bis zur Stelle der zu untersuchenden Verbindung die Energie oder die Gesamtleistung des $N_1^{'}$-Impulses, der durch mit einem minimalen Luftspalt angekoppelte Stirnseiten der anzukoppelnden Lichtleiter passiert, von der Ausgangsstirnseite des zweiten anzukoppelnden Lichtleiters reflektiert und zur Eingangsstirnseite des ersten Lichtleiters zurückgekehrt ist, mißt, den ersten und den zweiten Lichtleiter verbindet, die Energie oder die Leistungen des $N_2^{'}$-Impulses, der die Verbindungsstelle passiert und von der Ausgangsstirnseite des sich gebildeten einheitlichen Lichtleiters reflektiert ist, mißt und optische Verluste K an der Verbindungsstelle gemäß der Beziehung
$K[dB] = 10 \lg 2n - 10 \lg (n^2 + 1) + 5 \lg N_2^{'} - 5 \lg N_1^{'}$,
worin n Gruppenbrechungsindex des Kernes der zu verbindenden Lichtleiter bedeutet, ermittelt.

9

a)

b)

c)

FIG.1

FIG. 2